# EUROPEAN PATENT SPECIFICATION

(11) **EP 0 525 941 B1**
(45) Date of publication and mention of the grant of the patent: **05.03.1997**
(21) Application number: 92304545.4
(22) Date of filing: 20.05.1992
(51) Int. Cl.: G06F 11/08, G06F 11/14, G11C 29/00

(54) **Method of self-diagnosing a mobile telephone set for use in a mobile telephone switching system and mobile telephone set being applied to the method**
Verfahren zur Selbstdiagnose eines mobilen Fernsprechapparats zum Gebrauch in einem mobilen Fernsprechvermittlungssystem und auf dieses Verfahren angewandeter Fernsprechapparat
Procédé d'auto-diagnostic de poste téléphonique mobile utilisé dans un système de commutation téléphonique mobile et poste téléphonique appliqué audit procédé

(30) Priority: 31.05.1991 JP 155346/91
(43) Date of publication of application: 03.02.1993
(73) Proprietor: NEC CORPORATION, Tokyo (JP)
(72) Inventor: Komoda, Motoyoshi, c/o NEC Corporation, Minato-ku, Tokyo (JP)
(74) Representative: Orchard, Oliver John

(56) References cited:
- EP-A- 0 127 002
- EP-A- 0 297 507
- DE-A- 3 105 254
- DE-A- 3 709 524
- US-A- 4 354 251

## Description

The present invention relates to a method of self-diagnosing a mobile telephone set for use in a mobile telephone switching system, and particularly to a method of self-diagnosing a read-only memory (hereinafter referred to as ROM) which is provided with the mobile telephone set, and to a mobile telephone set for employing the method.

In mobile telephone sets, various self-diagnoses are carried out when the power supply is turned ON, and the reliability of mobile telephone sets is improved by preventing use unless the mobile telephone sets are determined to be normal as a result of self-diagnoses. The self-diagnoses, include a diagnosis for a ROM provided within the telephone sets, which must be carried out without fail. In this case, the contents of all the addresses of the ROM are read out to carry out operations such as summing up or logic calculus exclusive OR. If each operational result turns out to be a value calculated previously, then a content of the ROM is determined to be normal, while, if not, then it is determined that something abnormal exists within the content of the ROM and the user is informed of that fact.

Incidentally, in recent mobile telephone sets, as the program size of the man-machine interface portion has been increased in order to achieve various functions, the capacity of ROM has been correspondingly increased from 512 kbits to 1 Mbit. As a result, there has arisen a problem in that it takes a long time for diagnosis if, each time the power supply is turned ON, the contents of all the addresses of ROM is read out for operation and the result of this operation is compared with a specific value to diagnose the ROM. For example, if a typical eight-bit microprocessor (hereinafter referred to as a CPU) takes about 1 to 2 seconds for the diagnosis, it takes about 1 to 2 seconds until the telephone set becomes operable after the power supply is turned ON, which irritates the user and results in a serious problem to impair the reputation of the mobile telephone switching system. In addition, also for the manufacturer, since the telephone set cannot be tested for about 1 to 2 seconds after the power supply is turned ON, the number of man-hours required for inspection is increased thereby resulting in an increase in manufacturing cost.

Features of a method to be described below, are that the self-diagnosing time of a mobile telephone set is shortened, that the mobile telephone set is made available for use within a reduced period of time after the power supply is turned ON, and that the mobile telephone set is made available for inspection promptly after the power supply is turned ON at the inspection stage during manufacture.

A particular method to be described below, as an example, includes the steps of comparing the content of the data stored within a specific address of a ROM with that stored within a specific address of a non-volatile memory when the power supply is turned ON, determining whether the ROM is normal or not by comparing whether the contents of the two data coincide with each other, and calculating the data stored within all the addresses of the ROM according to a predetermined calculus in order to compare the result of the calculation with the data stored within the non-volatile memory, when the contents of the two data do not coincide. The content of the data stored within the specific address of the ROM may be the sum of the data stored within all the areas of the ROM, the value complementing the sum as a certain specific value, and being the result of an exclusive logical OR of the data stored within all of the addresses of the ROM, or the sum of the cyclic redundancy codes for each data within all of the addresses of the ROM.

There will also be described below, as an example a mobile telephone set employing a method of shortening the self-diagnosing time, and including first memory means having a plurality of memory locations in each of which data are to be stored, second memory means having a specific memory location in which data are to be stored, means for comparing first data stored in one of the plurality of memory locations with second data stored in the specific memory location, calculation means for making a calculation on all data stored in the plurality of memory locations when the first and second data do not coincide with each other, to produce a calculation result, means for comparing the calculation result with a predeter-mined value and means for indicating that the first memory means is abnormal when the calculation result differs from the predetermined value.

Further, the calculation means for making a calculation on all data stored in the plurality of memory locations may be means for summing all data stored in the plurality of memory locations to produce the sum of all of the data as the calculation result, the first memory means may be a read only memory (ROM) and the second memory means may be a non-volatile memory in the mobile telephone set.

The following description and drawings disclose, by means of an example, the invention which is characterised in the appended claims, whose terms determine the extent of the protection conferred hereby.

In the drawings:-
Fig. 1 is a flowchart of a specific embodiment of a self-diagnosing method for a mobile telephone set, and
Fig. 2 is a block schematic diagram of a mobile telephone set to which the self-diagnosing method illustrated in Fig. 1 is applied.

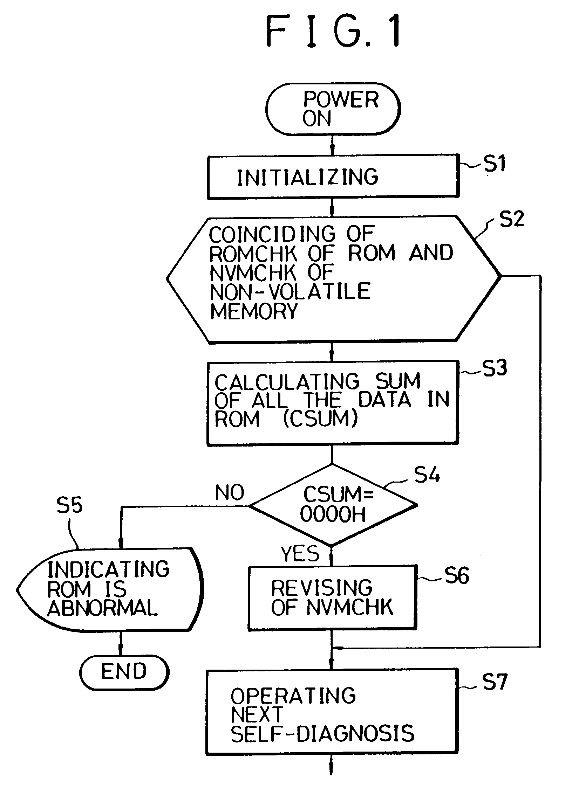

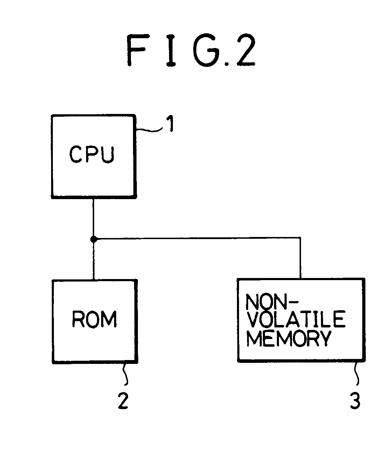

Referring to the drawings, Fig. 2 is a block schematic circuit diagram of the essential portion of a mobile telephone set to which a self-diagnosing method illustrated in Fig. 1 is applied. This mobile telephone set includes a CPU 1, a ROM 2 and a non-volatile memory 3.

Any arbitrary content of the ROM 2 can be written into any arbitrary address within the non-volatile memory 3. The CPU 1 determines whether the content of the data stored within a specific address of the ROM 2 and that of the non-volatile memory 3 coincide by comparing them.

Based on this circuit arrangement, the diagnosing method employed will now be described with reference to Fig. 1. At first, in step S1, the mobile telephone set is initialized. Next, in step S2, CPU 1 compares ROMCHK, which is data stored within a specific address of ROM 2, with NVMCHK which is data stored within a specific address of the non-volatile memory 3. The value of ROMCHK is the complementary data provided to set up the sum of the values of the data of all the addresses of ROM 2 as a certain specific value, for example, 0000H, which is assigned at the stage of factory inspection, while NVMCHK is the same value as that described above, which is stored within non-volatile memory 3. In this case, the content of NVCHK is previously written within the specific address of non-volatile memory 3. If both contents coincide, then ROM 2 is determined to be normal, after which the self-diagnosis proceeds to the next self-diagnosing operation step S7. If they do not coincide, the operation proceeds to step S3 deciding that some change has been added to the content of ROM 2.

In step S3, the data values of all the addresses of ROM 2 are read out, and their sum is calculated as a checking sum (hereinafter referred to as CSUM). Step S4 is for determining whether the value of CSUM is equal to the value calculated and stored in another address of ROM 2 previously, for example, 00A0H and, if it is a value other than 00A0H, then it is determined that something abnormal exists in the content of ROM 2, and indicates to the user that ROM 2 is abnormal in step S5. On the other hand, if the value of CSUM is 00A0H, then it is determined that the content of ROM 2 is normal, and after revising the value of ROMCHK of ROM 2 and the value of NVMCHK of the non-volatile memory 3 in step 6, proceeds to carry out next self-diagnosing operation step 7. Incidentally, although in this embodiment, a complementary value, which complements the setting-up of the sum of the data of all of the areas of the ROM as a predetermined value, is compared in order to determine the validity of the ROM, the value may be that sum per se, the exclusive logical OR of the data within all of the addresses of the ROM 2, or the sum of the cyclic redundancy codes of the data within all of the addresses of the ROM 2.

While certain representative embodiments have been described for the purpose of illustrating the invention, it will be apparent to those skilled in the art that various changes and modifications may be made therein without departing from the scope of the protection sought by the appended claims.

## Claims

1. A method of self-diagnosing a mobile telephone set for use in a mobile telephone switching system, the telephone set having a ROM, read only memory, (2), a non-volatile memory (3) and a microprocessor (1) and incorporating data, the content of which is the result of a calculation based on all of the data stored within specific locations in the ROM (2) and in the non-volatile memory (3) and made according to a predetermined formula, the method including the steps of comparing the content of the data stored in a specific location of the ROM (2) with the content of the data stored in a specific location of the non-volatile memory when the power supply is turned ON, and, when the content of the data stored in the specific locations of the ROM (2) and the non-volatile memory (3) do not coincide, calculating the sum of all of the data stored in the ROM (2) and, when the calculated result differs from the content of the data stored in the non-volatile memory (3), indicating the abnormality of the ROM (2).

2. A method of self-diagnosing a mobile telephone set as claimed in Claim 1 wherein, when the content of the data stored within the specific location of the ROM (2), and the content of the data stored within the specific location of the non-volatile memory are the same, it is determined that the content of the ROM(2) is normal and that the next step in the self-diagnosing operation may be carried out.

3. A method of self-diagnosing a mobile telephone set as claimed in Claim 1 which includes the steps of determining whether the content of the data stored within the specific location of the ROM (2) is the exclusive OR of the data stored within all of the address of the ROM (2), and whether the content of the data stored within the specific location of the non-volatile memory is the same as the exclusive OR.

4. A method of self-diagnosing a mobile telephone set as claimed in Claim 1 wherein the content of the data stored in a specific location of the ROM (2) is the sum of the cyclic redundancy codes of the data stored in all of the locations of the ROM (2), which includes the step of determining whether the content of the data stored within a specific location of the non-volatile memory (3) has the same value as the sum of the cyclic redundancy codes of the data stored in all of the locations of the ROM (2).

5. A method of self-diagnosing a mobile telephone set as claimed in Claim 1 wherein the content of the data stored in a specific location of the ROM (2) is a complementary value which complements that of the sum of the data stored in all of the locations of the ROM (2), and the content of the data stored in the specific location of the non-volatile memory (3) is the same as that of the complementary value.

6. An apparatus for use in the self-diagnoses of a telephone set including a ROM, read-only memory, (2) having a plurality of memory locations in each of which data are to be stored, a non-volatile memory (3) having a specific memory location in which data are to be stored, a comparator (CPU1) for comparing first data stored in one of the plurality of memory locations in the ROM (2) with second data store in the specific memory locations of the non-volatile memory (3), a calculator (CPU1) for calculating the sum of the data stored in the plurality of memory locations of the ROM (2), when the first and second data do not coincide with each other, to produce a calculated result, a comparator (CPU1) for comparing the calculated result with a predetermined value, and an indicator for indicating that the ROM (2) is abnormal when the calculated result differs from the predetermined value.

7. An apparatus as claimed in Claim 6, wherein the calculator (CPU1) includes means for summing all of the data stored in the plurality of memory locations in the ROM (2) to produce the calculated result.

## Patentansprüche

1. Verfahren zur Selbstdiagnose eines mobilen Fernsprechapparates für den Gebrauch in einem mobilen Fernsprechvermittlungssystem, wobei der Fernsprechapparat ein ROM (Read Only Memory - Nur-Lese-Speicher) (2), einen nicht-flüchtigen Speicher (3) und einen Mikroprozessor (1) aufweist und Daten enthält, deren Inhalt das Ergebnis einer Berechnung auf der Basis aller innerhalb spezieller Stellen in dem ROM (2) und in dem nicht-flüchtigen Speicher (3) gespeicherter und nach einer vorgegebenen Formel erzeugter Daten ist, wobei das Verfahren die Schritte aufweist: Vergleichen des Inhalts der in einer speziellen Stelle des ROMs (2) gespeicherten Daten mit dem Inhalt der in einer speziellen Stelle des nicht-flüchtigen Speichers gespeicherten Daten, wenn die Energieversorgung eingeschaltet wird, und, wenn der Inhalt der in den speziellen Stellen des ROMs (2) und des nicht-flüchtigen Speichers (3) gespeicherten Daten nicht übereinstimmen, Berechnen der Summe aller in dem ROM (2) gespeicherten Daten und, wenn das berechnete Ergebnis von dem Inhalt der in dem nicht-flüchtigen Speicher (3) gespeicherten Daten abweicht, Anzeige der Anormalität des ROMs (2) aufweist.

2. Verfahren zur Selbstdiagnose eines mobilen Fernsprechapparates nach Anspruch 1, wobei, wenn der Inhalt der in der speziellen Stelle des ROMs (2) gespeicherten Daten und der Inhalt der in der speziellen Stelle des nicht-flüchtigen Speichers derselbe ist, die Entscheidung getroffen wird, daß der Inhalt des ROMs (2) normal ist und daß der nächste Schritt in dem Selbstdiagnoseablauf ausgeführt werden kann.

3. Verfahren zur Selbstdiagnose eines mobilen Fernsprechapparates nach Anspruch 1, mit den Schritten: Feststellen, ob der Inhalt der in der in der speziellen Stelle des ROMs (2) gespeicherten Daten die Exklusiv-ODER-Verknüpfung der innerhalb aller Adressen des ROMs (2) gespeicherten Daten ist und ob der Inhalt der in der speziellen Stelle des nicht-flüchtigen Speichers gespeicherten Daten derselbe wie die Exklusiv-ODER-Verknüpfung ist.

4. Verfahren zur Selbstdiagnose eines mobilen Fernsprechapparates nach Anspruch 1, wobei der Inhalt der in einer speziellen Stelle des ROMs (2) gespeicherten Daten die Summe der zyklischen Redundanzkodes der in allen Stellen des ROMs (2) gespeicherten Daten ist, und mit dem Schritt Feststellen, ob der Inhalt der innerhalb einer speziellen Stelle des nicht-flüchtigen Speichers (3) gespeicherten Daten denselben Wert hat wie die Summe der zyklischen Redundanzkodes der in allen Stellen des ROMs (2) gespeicherten Daten.

5. Verfahren zur Selbstdiagnose eines mobilen Fernsprechapparates nach Anspruch 1, wobei der Inhalt der in einer speziellen Stelle des ROMs (2) gespeicherten Daten ein komplementärer Wert ist, welcher das Komplement zu der Summe der in allen Stellen des ROMs (2) gespeicherten Daten bildet, und der Inhalt der in der speziellen Stelle des nicht-flüchtigen Speicher (3) gespeicherten Daten derselbe wie der komplementäre Wert ist.

6. Vorrichtung zum Gebrauch bei der Selbstdiagnose eines Fernsprechapparates, die ein ROM (Read Only Memory - Nur-Lese-Speicher) (2) mit mehreren Speicherstellen, in denen allen Daten gespeichert werden sollen, einen nicht-flüchtigen Speicher (3) mit einer speziellen Speicherzelle in welcher Daten gespeichert werden sollen, einen Komparator (CPU 1) zum Vergleichen von in einer der mehreren Speicherstellen in den ROM (2) gespeicherten ersten Daten mit in den speziellen Speicherstellen des nicht-flüchtigen Speichers (3) gespeicherten zweiten Daten, eine Berechnungseinrichtung (CPU 1) zum Berechnen der Summe der in den mehreren Speicherstellen des ROMs (2) gespeicherten Daten, wenn die ersten und zweiten Daten nicht miteinander übereinstimmen, um ein Berechnungsergebnis zu erzeugen, einen Komparator (CPU 1) zum Vergleichen des Berechnungsergebnisses mit einem vorgegebenen Wert und eine Anzeigeeinrichtung aufweist, um anzuzeigen, daß das ROM (2) anormal ist, wenn sich das Berechnungsergebnis von dem vorgegebenen Wert unterscheidet.

7. Vorrichtung nach Anspruch 6, wobei die Berechnungseinrichtung (CPU 1) eine Einrichtung zum Summieren aller in den mehreren Speicherstellen in dem ROM (2) gespeicherten Daten aufweist, um ein Berechnungsergebnis zu erzeugen.

## Revendications

1. Procédé d'auto-diagnostic d'un poste téléphonique mobile destiné à être utilisé dans un système de commutation téléphonique mobile, le poste téléphonique ayant une ROM (mémoire morte) (2), une mémoire rémanente (3) et un microprocesseur (1) et incorporant des données dont le contenu est le résultat d'un calcul fondé sur toutes les données mémorisées dans des positions spécifiques dans la ROM (2) et dans la mémoire rémanente (3) et effectué selon une formule prédéterminée, le procédé comprenant les étapes consistant à comparer le contenu des données mémorisées dans une position spécifique de la ROM (2) et le contenu des données mémorisées dans une position spécifique de la mémoire rémanente lorsque le bloc d'alimentation est mis sous tension, et, lorsque le contenu des données mémorisées dans les positions spécifiques de la ROM (2) et de la mémoire rémanente (3) ne coïncident pas, à calculer la somme de toutes les données mémorisées dans la ROM (2) et, lorsque le résultat calculé diffère du contenu des données mémorisées dans la mémoire rémanente (3), à indiquer l'anomalie de la ROM (2).

2. Procédé d'auto-diagnostic d'un poste téléphonique mobile selon la revendication 1, dans lequel, lorsque le contenu des données mémorisées dans la position spécifique de la ROM (2) et le contenu des données mémorisées dans la position spécifique de la mémoire rémanente sont identiques, il est déterminé que le contenu de la ROM (2) est normal et que l'étape suivante dans l'opération d'auto-diagnostic peut être effectuée.

3. Procédé d'auto-diagnostic d'un poste téléphonique mobile selon la revendication 1, qui comprend les étapes consistant à déterminer si le contenu des données mémorisées dans la position spécifique de la ROM (2) est le OU exclusif des données mémorisées dans toutes les adresses de la ROM (2), et si le contenu des données mémorisées dans la position spécifique de la mémoire rémanente est identique au OU exclusif.

4. Procédé d'auto-diagnostic d'un poste téléphonique mobile selon la revendication 1, dans lequel le contenu des données mémorisées dans une position spécifique de la ROM (2) est la somme des codes de redondance cyclique des données mémorisées dans toutes les positions de la ROM (2), qui comprend l'étape consistant à déterminer si le contenu des données mémorisées dans une position spécifique de la mémoire rémanente (3) a la même valeur que la somme des codes de redondance cyclique des données mémorisées dans toutes les positions de la ROM (2).

5. Procédé d'auto-diagnostic d'un poste téléphonique mobile selon la revendication 1, dans lequel le contenu des données mémorisées dans une position spécifique de la ROM (2) est une valeur complémentaire qui est le complément de la somme des données mémorisées dans toutes les positions de la ROM (2), et le contenu des données mémorisées dans la position spécifique de la mémoire rémanente (3) est identique à celui de la valeur complémentaire.

6. Appareil destiné à être utilisé dans les autodiagnostics d'un poste téléphonique comprenant une ROM (mémoire morte) (2) ayant une pluralité de positions de mémoire dans chacune desquelles des données doivent être mémorisées, une mémoire rémanente (3) ayant une position de mémoire spécifique dans laquelle des données doivent être mémorisées, un comparateur (UC1) pour comparer des premières données mémorisées dans une position de mémoire de la pluralité de positions de mémoire dans la ROM (2) et des deuxièmes données mémorisées dans les positions de mémoire spécifiques de la mémoire rémanente (3), un calculateur (UC1) pour calculer la somme des données mémorisées dans la pluralité de positions de mémoire de la ROM (2), lorsque les premières et deuxièmes données ne coïncident pas les unes avec les autres, pour produire un résultat calculé, un comparateur (UC1) pour comparer le résultat calculé et une valeur prédéterminée, et un indicateur pour indiquer que la ROM (2) a une anomalie lorsque le résultat calculé diffère de la valeur prédéterminée.

7. Appareil selon la revendication 6, dans lequel le calculateur (UC1) comprend des moyens pour additionner toutes les données mémorisées dans la pluralité de positions de mémoire dans la ROM (2), pour produire le résultat calculé.
